# EUROPEAN PATENT APPLICATION

(11) **EP 4 851 731 A1**
(43) Date of publication of application: **09.12.2026**
(21) Application number: 26179251.9
(22) Date of filing: 18.05.2026
(51) Int. Cl.: G04G 17/04, G02F 1/13357, G04G 9/00

(54) **MODULE AND TIMEPIECE**

(30) Priority: 03.06.2025 JP 2025092352
(71) Applicant: Casio Computer Co., Ltd., Tokyo 151-8543 (JP)
(72) Inventor: Cho, Shinya, Hamura-shi, Tokyo 205-8555 (JP)
(74) Representative: Grünecker Patent- und Rechtsanwälte PartG mbB

(57) **Abstract**

A module (2) includes a dial (3), a light-transmissive liquid crystal panel (41), a light guide plate (42) that diffuses incident light to illuminate the liquid crystal panel, and a light source (43), the dial, the light-transmissive liquid crystal panel, and the light guide plate being disposed in order from a viewing side. The dial has a first opening (31) and a second opening (32), the liquid crystal panel is of an irregular shape avoiding a driver in plan view, and is disposed at least from a first area (Ar1) corresponding to the first opening of the dial to a second area (Ar2) corresponding to the second opening of the dial, and the light source allows light to enter the light guide plate and is provided outside between one end side where the first area is located and another end side where the second area is located.

## Description

### BACKGROUND OF THE INVENTION

### TECHNICAL FIELD

The present disclosure relates to a module and a timepiece.

### DESCRIPTION OF RELATED ART

JP-A-2004-271871 discloses a liquid crystal display device comprising an approximately rectangular liquid crystal display panel and a light guide plate superimposed thereon, with an LED placed at the corner of the light guide plate (the incidence surface formed by cutting the corner).

### SUMMARY OF THE INVENTION

However, in devices such as timepieces that have a shaft nearly in the center or contain various other mechanical parts inside, it is difficult to place a rectangular liquid crystal panel and light guide plate as described in the description of related art on the entire front side of the device. On the other hand, when displays are to be provided in multiple locations, the number of components and the number of assembly steps increase if a liquid crystal display panel and light guide plate are provided separately for each, which is undesirable.

An objective of the present disclosure is to solve these problems and to provide a module and a timepiece that can display in multiple locations using an integral liquid crystal panel.

According to an aspect of the present disclosure, there is provided a module comprising a dial, a light-transmissive liquid crystal panel, a light guide plate that diffuses incident light to illuminate the liquid crystal panel, and a light source, the dial, the light-transmissive liquid crystal panel, and the light guide plate being disposed in order from a viewing side for a user, wherein
the dial has a first opening and a second opening,
the liquid crystal panel is of an irregular shape provided in an area that avoids a driver in plan view from the viewing side, and is disposed at least from a first area corresponding to the first opening of the dial to a second area corresponding to the second opening of the dial, and
the light source allows light to enter the light guide plate and is provided outside between one end side where the first area of the liquid crystal panel is located and another end side where the second area is located, in plan view from the viewing side.

According to an aspect of the present disclosure, it is possible to use an integrated liquid crystal panel to display in multiple locations.

### BRIEF DESCRIPTION OF DRAWINGS

FIG. 1 is a key sectional view of a timepiece according to an embodiment.
FIG. 2 is a key plan view of a module according to the embodiment.
FIG. 3 is a plan view of a light guide plate and a light source included in a liquid crystal display device in the embodiment.
FIG. 4 is a key sectional view of the module along the IV-IV line in FIG. 2.

### DETAILED DESCRIPTION

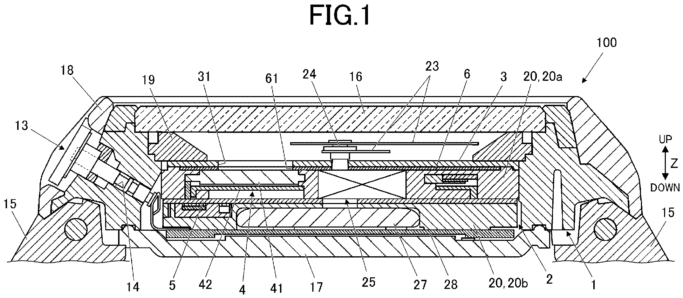

With reference to FIGS. 1 through 4, one embodiment of the module and timepiece of the present disclosure will be described. In the embodiments described below, the timepiece is, for example, a wristwatch worn on the wrist (hereinafter referred to as "timepiece 100"). In the following explanation, the thickness direction (vertical direction) of the timepiece 100 is referred to as the Z direction, and the front side, the viewing side, is referred to as the "upper side (up)" and the back side as the "lower side (down), non-viewing side" in the Z direction. The direction of rotation around the central axis is called the "circumferential direction", and the side closer to the central axis in the plane perpendicular to the central axis is called the "inner side (inner circumferential side, inner diameter side)" and the side farther away is called the "outer side (outer circumferential side, outer diameter side)". The following embodiments are subject to various technically preferred limitations for implementing the present disclosure, but the scope of the disclosure is not limited to the following embodiments and illustrated examples.

As shown in FIG. 1, and the like, the timepiece 100 according to the present embodiment includes a module 2, which is described below. The module 2 is housed in a case 1. In the embodiment, the case 1 is made of a super engineering plastic such as polyarylate (PAR), an engineering plastic such as polyacetal (POM), or a hard synthetic resin such as glass fiber reinforced resin. The materials used to form case 1 are not limited. It is sufficient that the case 1 is formed of some hard material, and may be made of various metallic materials such as stainless steel (SUS) and titanium, ceramics, or other materials other than those illustrated here.

The case 1 is cylindrical along the Z direction, which is the thickness direction of the timepiece 100, and is a hollow short column shape with openings at the top and bottom in the Z direction. The outer portion of the case 1 (for example, the outer portion of the 3 o'clock side, 9 o'clock side, and the like in analog timepieces) is provided with operation receivers 13 such as push buttons and front buttons for various input operations by the user. A through hole 14 (see FIG. 1) is formed in the side of the case 1 at a position corresponding to the shaft of the operation receiver 13, which passes through the case 1 both inside and outside. In the embodiment, the band attachment portion 15 is provided on both sides of the outer portion of the case 1 in the 12 o'clock-6 o'clock direction in an analog system timepiece, respectively. The band attachment portion 15 is a portion for connecting a band, not shown, to the case 1.

On the upper side of the case 1 (the upper side in the Z direction, the viewing side or front side in a timepiece), a windshield member 16 (see FIG. 1) is attached to close the upper opening. The windshield member 16 is a transparent member (cover member) formed, for example, of glass material or transparent resin material. A back cover member 17 is attached to the lower side of the case 1 (lower side in the Z direction, back side in the timepiece 100), and the lower opening of the case 1 is closed by the back cover member 17. The windshield member 16 and back cover member 17 is preferably attached via a waterproof ring or similar. By interposing a waterproof ring or the like between the windshield member 16 and the back cover member 17 and the case 1, the upper and lower openings of the case 1 are closed while airtightness is ensured.

In the timepiece 100 of the embodiment, the exterior member 18 is attached from the upper side of the case 1 (upper side in the Z direction, the viewing side or front side in the timepiece) to the lateral side. In the embodiment, the exterior member 18 is a bezel made of a synthetic resin such as urethane resin such as polyurethane (PUR; polyurethane), for example, and is disposed to surround the windshield member 16. The material used to form the exterior member 18 is not limited to urethane resin. The shape and extent to which the exterior member 18 is provided are not limited to the illustrated example. It may be configured without the exterior member 18. The dial 3, which constitutes the module 2, is disposed on the lower side of the windshield member 16 (lower side in the Z direction, back side in the timepiece 100). In the embodiment, an approximately ring-shaped trim member 19 is placed between the dial 3 and the windshield member 16 so as to partially cover the outer circumference of the dial 3. The trim member 19 may be provided with hour markers, and the like along the circumferential direction, which are indicated by the hand 23, for example, as described below.

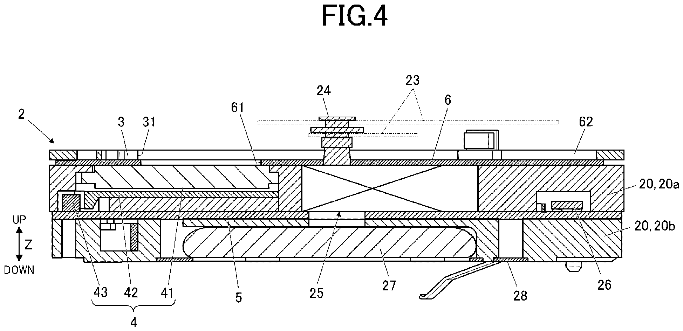

The hollow portion inside the case 1 is a housing for module 2 and other components. In an embodiment, the module 2 includes at least a dial 3 and a liquid crystal display device 4. The module 2 has a housing 20 made of resin or other material, and the dial 3 and liquid crystal display device 4 are assembled in the housing 20. As shown in FIGS. 1 and 4, the housing 20 of the embodiment includes an upper housing 20a, which is disposed on the upper side (viewing side) in the Z direction, and a lower housing 20b, which is disposed on the lower side (non-viewing side) in the Z direction, with the dial 3 disposed on the upper side of the upper housing 20a (upper side in Z direction) and the liquid crystal display device 4 and other devices are incorporated in the upper housing 20a. It is not required that the housing 20 be divided into an upper housing 20a and a lower housing 20b. The housing 20 may be an integral part. In the following, when the upper housing 20a and lower housing 20b are not specifically distinguished, they are simply referred to as the housing 20.

The liquid crystal display device 4 comprising the module 2 includes at least a light-transmissive liquid crystal panel 41, a light guide plate 42, and a light source 43 that allows light to enter the light guide plate 42. Incident light from the light source 43 is diffused by the light guide plate 42 to illuminate the liquid crystal panel 41 and provide various displays. For example, an LED (Light Emitting Diode) is used as the light source 43. When the module 2 of the embodiment is viewed in order from the user's viewing side, the dial 3, liquid crystal panel 41, and light guide plate 42 are disposed in order from top to bottom in the Z direction.

The dial 3 has a first opening 31 and a second opening 32. In the embodiment, the first opening 31 is an approximately rectangular display window frame provided over a wide area on the 6 o'clock side of an analog-type timepiece, and the second opening 32 is an approximately circular display window frame provided around 1 or 2 o'clock side on an analog-type timepiece. The liquid crystal panel 41 includes an L-shaped portion 40, substantially L-shaped in plan view, which is disposed over at least a first area Ar1 corresponding to the first opening 31 of the dial 3 to a second area Ar2 corresponding to the second opening 32 of the dial 3. The L-shaped portion 40 consists of a portion extending along the 3 o'clock-9 o'clock direction and a portion connected to either end side of that portion and extending along the 12 o'clock-6 o'clock direction.

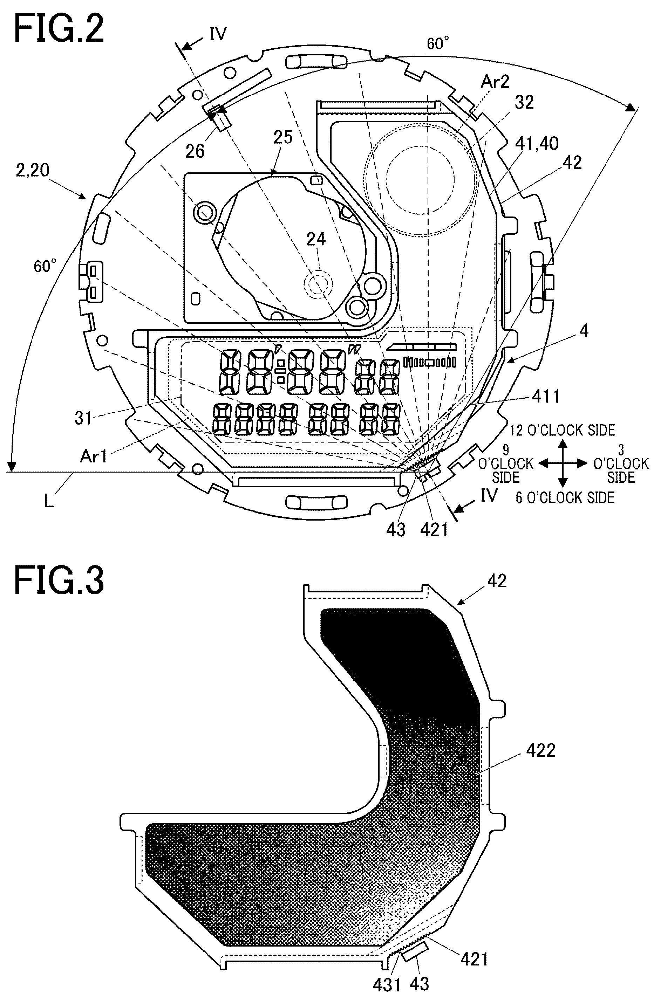

As shown in FIG. 2, the L-shaped portion 40 of the liquid crystal panel 41 of the embodiment has an approximately inverse L shape, consisting of a portion extending along the 3 o'clock-9 o'clock direction and a portion extending from the 3 o'clock side end of the portion toward the 12 o'clock side. The liquid crystal panel 41 may include a portion that extends beyond the L-shaped portion if it includes the L-shaped portion 40. In the embodiment, the liquid crystal panel 41 and the light guide plate 42 are of the same size and shape. It is sufficient that the light guide plate 42 is provided to the extent that it can illuminate at least the first area Ar1 and the second area Ar2 of the liquid crystal panel 41. The shape of the light guide plate 42 may be different from that of the liquid crystal panel 41, or the light guide plate 42 may be formed larger than the liquid crystal panel 41.

Although not shown in the figure, the liquid crystal panel 41 is composed of liquid crystal sealed between two glass plates. The liquid crystal panel 41 includes a connector, and the like, not shown, for connecting to the substrate 5 outside the effective display area, which can be used as the display area, but the first area Ar1 and the second area Ar2 are both provided within the effective display area. The first area Ar1 in the liquid crystal panel 41 is located on one side of the L-shaped portion 40, and the second area Ar2 in the liquid crystal panel 41 is located on the other side of the L-shaped portion 40.

In the embodiment, one side of the L-shaped portion 40 where the first area Ar1 is located is the side extending along the 3 o'clock-9 o'clock direction to the 6 o'clock side in an analog system timepiece, and the first area Ar1 is provided in a wide area at 6 o'clock side corresponding to the first opening 31 in the dial 3. The other side of the L-shaped portion 40 where the second area Ar2 is located is the side extending along the 12 o'clock-6 o'clock direction in an analog system timepiece. In the illustrated example, the second area Ar2 is provided near 1 o'clock or 2 o'clock side on an analog-type timepiece, corresponding to the second opening 32 in the dial 3.

In FIG. 2, the spread of light emitted from the light source 43 is shown schematically as a dashed line. The first and second openings 31 and 32 formed in the dial 3 are shown hypothetically with two dotted lines, and the first area Ar1 and second area Ar2 corresponding to the first and second openings 31 and 32, respectively, are shown with small dotted lines. The light emitted from light source 43 spreads radially, as shown in FIG. 2. The way and range of light spread can vary depending on conditions such as the output of the light source 43 and the position of the light source 43. In the embodiment, when the line along the 6 o'clock side (bottom side in FIG. 2) of the effective display area on the liquid crystal panel 41 is set as the reference line L, the light irradiation range by the light source 43 is assumed to be a fan-shaped range of approximately 120 degrees from the reference line L. And as shown in the illustration, both the first area Ar1 and the second area Ar2 of the liquid crystal panel 41 are located within the light irradiation range by the light source 43.

The outer peripheral corner of the L-shaped portion 40 in the liquid crystal panel 41 is cut to form a inclined portion 411. The corner corresponding to the inclined portion 411 in the light guide plate 42 is also cut, and the side near the first area Ar1 in the cut portion is a knurled portion 421 with serrated fine irregularities. In the embodiment, the light source 43 that allows light to enter the light guide plate 42 is disposed on the outer peripheral side (outer diameter side) of the module 2 than the liquid crystal panel 41 and light guide plate 42, and is provided outside the inclined portion 411 of the liquid crystal panel 41 in plan view from the viewing side. Furthermore, in the embodiment, the light source 43 is disposed close to the first area Ar1 side (near the approximately 5 o'clock side in an analog-type timepiece) in the inclined portion 411, the first area Ar1 side being close to the first area Ar1 in the liquid crystal panel, in plan view from the viewing side (upper side in the Z direction). As a result, the light source 43 has its light emitting surface 431 facing the knurled portion 421 of the light guide plate 42, as shown in FIGS. 2 and 3.

The display area of the liquid crystal panel 41 (the area of the effective display area that can be used as an area for display, in the embodiment, the first area Ar1 and the second area Ar2) and the corresponding openings (in the embodiment, the first opening 31 and the second opening 32) of the dial 3, which is the window frame for display, are preferably generally as wide as possible in relation to the external shape of the module 2. However, if the openings of dial 3 and the light source 43 (LED) are too close to each other, the display may be difficult to see or uneven brightness may be noticeable. In this regard, by placing the light source 43 as far away from the liquid crystal panel 41 as possible and securing the maximum flat distance between the light emitting surface 431 of the light source 43 and the opening of the dial 3, the occurrence of such uneven brightness can be prevented. In addition, placing the light source 43 as far away from the liquid crystal panel 41 as possible is advantageous in terms of light spread, since the light can be irradiated over a wider area and diffused by the light guide plate 42. As mentioned above, the light irradiation range by the light source 43 varies depending on the position of the light source 43, and the like Therefore, the light irradiation range can be further widened by changing the position of the light source 43.

In the embodiment, information including the time (for example, information on time of day, date, day of the week, and the like) is displayed in the first area Ar1 of the liquid crystal panel 41 corresponding to the first opening 31 at 6 o'clock side in an analog-type timepiece. In contrast, the second area Ar2 of the liquid crystal panel 41 corresponding to the second opening 32 at 1 o'clock side or 2 o'clock side on an analog timepiece displays information that is relatively less important than information such as the time, such as the connection status of communications such as Bluetooth (Bluetooth; registered trademark), the achievement status of various activities such as running and walking, and the number of steps taken by the user. Therefore, in the embodiment, the light source 43 is disposed close to the first area Ar1 side so that it can illuminate the first area Ar1 preferentially over the second area Ar2, and the brightness of the liquid crystal panel 41 in the first area Ar1 is more assured.

The light guide plate 42 has a diffusion pattern (hereinafter referred to as "protruding pattern 422" in the embodiment) that diffuses the incident light finely formed on a flat surface (see FIG. 3). The protruding pattern 422 is, for example, a fine protruding shape, the shape of fine protrusions, formed on the surface of the light guide plate 42. When LEDs are used as the light source 43, as in the embodiment, the amount of light is high near the light source 43, but the amount of light tends to decrease as the distance increases. For this purpose, for example, a protruding pattern 422 is formed on one side of the light guide plate 42, and the uneven brightness is set to be uniform by the coarseness and density of the protrusions. Specifically, the protruding pattern 422 is formed so that its density becomes coarse to dense as it moves away from the light source 43. As a result, even when LEDs are used as the light source 43 for the backlight of the liquid crystal panel 41, the light incident from the light source 43 reaches the first area Ar1 and the second area Ar2 of the liquid crystal panel 41, and the light from the light source 43 can illuminate the entire liquid crystal panel 41 nearly uniformly. The diffusion pattern of the light guide plate 42 is not limited to a protruding pattern 422, but a recessed pattern may be finely formed on a flat surface.

In FIG. 3, the protruding pattern 422 is represented by shading so that the denser the protruding pattern 422 is, the darker the color becomes. For example, the area facing the second opening 32, which is farther from the light source 43, has a somewhat denser protruding pattern 422 than the first opening 31 side in order to guide light to the second area Ar2. In addition, the portions of the dial 3 that are outside of the first and second openings 31 and 32 are not visible, so there is less need to diffuse light. Therefore, for example, no protruding pattern 422 is formed in the light guide plate 42, such as in the area that is lower than the first opening 31 of the dial 3. In the embodiment, the housing 20 (upper housing 20a) forming the module 2 is preferably made of a relatively brightly colored resin or the like, such as white. In this way, the reflection from the housing 20 is also expected to improve the brightness of the liquid crystal panel 41.

The timepiece 100 in the embodiment is a hybrid-type timepiece that uses the liquid crystal display device 4 to digitally display various information and the hand 23 to indicate the time, and the like, in an analog manner. The housing 20 (upper housing 20a) of the module 2 contains the functional parts for analog display in addition to the liquid crystal display device 4. Specifically, the module 2 includes a hand shaft 24 to which the hand 23 is attached, and a drive mechanism 25 (driver) that drives the hand 23 to move, that is, rotate around the hand shaft 24. The drive mechanism 25 is an analog block that includes a motor, not shown, which is the drive source, and a wheel train mechanism, and the like, consisting of gears, and the like, which transmit the motor's driving force to the hand 23. As shown in FIG. 2, in the embodiment, the liquid crystal panel 41 of the liquid crystal display device 4 is located in an area that avoids the hand shaft 24 and the drive mechanism 25.

A substrate 5 on which various electronic components are mounted is disposed between the upper housing 20a and the lower housing 20b, and the light source 43 of the liquid crystal display device 4 is mounted on the substrate 5. The timepiece 100 of the embodiment also has a communication part for communicating with external devices such as various terminal devices, for example, and an antenna-related component 26 for communication is disposed on the substrate 5. The communication part in the module 2 of the timepiece 100 allows communication connection with a mobile terminal or other device, for example, via Bluetooth, to obtain time correction information and other information. The antenna-related component 26 that makes up the communication part is a communication module that includes, for example, antennas (antenna patterns), modulation and demodulation circuits, and signal processing circuits. In plan view from the viewing side, the liquid crystal panel 41 is preferably provided in an area that does not overlap with the antenna-related component 26. This avoids the reduction of reception sensitivity of the antenna caused by the liquid crystal panel 41. The communication method by the communication part is, for example, wireless data communication according to the BLE (Bluetooth Low Energy) communication standard. The method of communication by the communication part is not limited and may be various types of communication other than BLE communication. In both cases, the antenna-related component 26 is mounted according to the communication system of the communication part.

In the embodiment, a solar panel 6 is placed between the dial 3 and the liquid crystal display device 4 in the side view. The solar panel 6 is formed in almost the same shape as the dial 3, with openings 61 (see FIGS. 1 and 4) at positions corresponding to the first 31 and second 32 openings in the dial 3, respectively. On the viewing side of the solar panel 6 is an annular holding plate 62 that holds the outer circumference of the solar panel 6, preventing the solar panel 6 from warping or lifting. The holding plate 62 is a component formed of various resins, for example. It is not essential that the timepiece 100 includes a solar panel 6, but if the timepiece includes a solar panel 6, a light-transmissive dial is used as the dial 3.

In addition, there is a battery 27 (for example, button cell), inside the housing 20, that provides power to various parts. In the illustrated example, the battery 27 is built into the lower housing 20b, and the circuit holding member 28 is disposed on the lower side of the lower housing 20b (lower side in the Z direction, toward the back cover member 17). The circuit holding member 28 is a plate-shaped member made of metal or other material and is fastened to the side of the housing 20 or the like. The circuit holding member 28 may have a switch tongue or other integral part, on the portion that wraps around the side of the housing 20, for switching the operation receiver 13 to the contacts of the substrate 5.

Next, the action of the module 2 and the timepiece 100 including the module 2 in the present embodiment will be described. When assembling the timepiece 100 according to the embodiment, the first step is to assemble the hand shaft 24 and drive mechanism 25 to the upper housing 20a. Furthermore, the dial 3 is placed above it. The dial 3 is disposed so that its first opening 31 corresponds to the first area Ar1 of the liquid crystal panel 41 and the second opening 32 corresponds to the second area Ar2 of the liquid crystal panel 41. When the solar panel 6 is provided, the solar panel 6 is placed on the lower side of the dial 3 so that it overlaps the dial 3, and the annular holding plate 62 is placed.

Then, the liquid crystal display device 4 and other devices are assembled from the back side (bottom side) of the upper housing 20a. The liquid crystal panel 41 and light guide plate 42 of the liquid crystal display device 4 are disposed at a location that does not overlap with the antenna-related component 26 and avoids the drive mechanism 25 and the hand shaft 24. In FIG. 2, the hand shaft 24 is located nearly in the center of the module 2, and the drive mechanism 25 is located around the hand shaft 24. The case of antenna-related component 26 mounted near the 11 o'clock position in an analog-type timepiece is shown. In the embodiment, the liquid crystal panel 41 and light guide plate 42 are approximately inverted L-shaped in plan view from the viewing side, and the first area Ar1 is disposed in the L-shaped portion 40 of the liquid crystal panel 41, which is disposed at 6 o'clock side in an analog-type timepiece and extends along the 3 o'clock-9 o'clock direction. The second area Ar2 is disposed in the L-shaped portion 40, which extends along the 12 o'clock-6 o'clock direction in an analog system timepiece.

This positions the first opening 31 of the dial 3 to correspond to the first area Ar1 of the liquid crystal panel 41 and the second opening 32 to the second area Ar2 of the liquid crystal panel 41, as described above. The second area Ar2 may be disposed anywhere in the portion extending along the 12 o'clock-6 o'clock direction, but in the embodiment, it is disposed near 1 o'clock side or 2 o'clock side in an analog-type timepiece. By arranging the dial 3 and liquid crystal display device 4 as shown above, as shown in FIG. 2, the liquid crystal panel 41 is disposed inside the light guide plate 42 in plan view from the viewing side, and the first opening 31 in the dial 3 and the second opening 32 in the dial 3 are disposed inside the liquid crystal panel 41 in plan view from the viewing side.

Then, the substrate 5 on which the antenna-related component 26 and other components are mounted is placed on the back side (bottom side) of the upper housing 20a and below the liquid crystal display device 4. A light source 43 is mounted on the substrate 5, at a position on the outer peripheral side of the module 2 than the inclined portion 411 in the corner of the liquid crystal panel 41 and closer to the first area Ar1 of the liquid crystal panel 41. The light guide plate 42 is provided with the knurled portion 421 at a position closer to the first area Ar1, corresponding to the corner portion of the liquid crystal panel 41 where the inclined portion 411 is provided, and the light source 43 is disposed so that its light emitting surface 431 faces the knurled portion 421 of the light guide plate 42 when it is mounted on the substrate 5.

Once the substrate 5 is placed, the lower housing 20b is superimposed on the back side (bottom side) of the upper housing 20a so as to sandwich this substrate 5. The circuit holding member 28 is attached from the bottom side in the Z direction in the lower housing 20b, and the battery 27 is assembled. This completes the module 2.

When the module 2 is completed, it is housed in the case 1, and the shaft of operation receiver 13 is inserted through the through hole 14 in the case 1 and attached so that it can switch with the contacts of substrate 5 in the module 2. Also, the trim member 19 is attached to cover the periphery of the dial 3, and the hand 23 is attached to the hand shaft 24 protruding from the module 2 to the upper side in the Z direction. Furthermore, the windshield member 16 is attached to close the opening portion of the upper side of the case 1 (upper side in the Z direction, front side, viewing side), the back cover member 17 is attached to close the opening portion of the lower side of the case 1 (lower side in the Z direction, back side, non-viewing side), and the exterior member 18 or other members are attached as appropriate. In addition, the band is fastened to the band attachment portions 15 on the 12 o'clock side and 6 o'clock side sides of the case 1. This completes the timepiece 100 (wristwatch).

In the embodiment, as shown in FIG. 2, the first opening 31 of the dial 3 exposes the first area Ar1 of the liquid crystal panel 41 that displays the time and other information, and the second opening 32 of the dial 3 exposes the second area Ar2 of the liquid crystal panel 41 that displays the communication status, activity achievement status and other information. The light source 43 is provided in the corner of the L-shaped portion 40, closer to the first area Ar1, so that it can preferentially illuminate the first area Ar1 where more important information is displayed. This ensures sufficient brightness in areas where the time and other information is displayed. The protruding pattern 422 is dense on the second area Ar2 side in the light guide plate 42. As a result, light from the light source 43 is guided by the light guide plate 42 not only to the first area Ar1, which is an area on one side of the L-shaped portion 40, but also to the second area Ar2, which is located on the other side of the L-shaped portion 40, to deliver sufficient light to the second area Ar2 to ensure the visibility of the display.

According to the present embodiment, a liquid crystal panel as a single unit in the module 2 can provide a liquid crystal display in multiple locations, and when such the module 2 is installed in a timepiece 100, a timepiece 100 capable of providing various digital displays can be realized. Even when liquid crystal displays are displayed in multiple locations, analog-type displays using the hand 23 can also be performed together because the liquid crystal display device 4 does not interfere with the drive mechanism 25 that rotates and drives the hand 23. Furthermore, the liquid crystal panel 41 of the liquid crystal display device 4 is disposed so that it does not overlap with the antenna-related component 26. Therefore, the reception sensitivity of the antenna is not reduced due to the liquid crystal display device 4.

Next, the effects of the module 2 and the timepiece 100 including the module 2 according to the embodiment will be described. The module 2 of the embodiment comprises, in order from the user's viewing side, a dial 3, a light-transmissive liquid crystal panel 41, and a light guide plate 42 that diffuses incident light to illuminate the liquid crystal panel 41. The dial 3 has a first opening 31 and a second opening 32. The liquid crystal panel 41 includes a substantially L-shaped portion 40 in plan view, which is disposed at least from the first area Ar1 corresponding to the first opening 31 of the dial 3 to the second area Ar2 corresponding to the second opening 32 of the dial 3, and the outer peripheral corner of the L-shaped portion 40 in the liquid crystal panel 41 is cut to form an inclined portion 411. A light source 43 is provided outside the inclined portion 411 of the liquid crystal panel 41 in plan view from the viewing side, which causes light to enter the light guide plate 42. This allows the liquid crystal panel 41 as a single unit to perform liquid crystal display in each of the multiple openings (in the embodiment, the first and second openings 31, 32) in the dial 3. This reduces the number of components and the number of assembly steps compared to the case where liquid crystal panels 41 are provided for the respective multiple openings. The large area of the liquid crystal panel 41 allows the display area to be changed flexibly within this range. Thus, for example, if a design change is made, such as a change in the position, number, or size of openings in the dial 3, which is the window frame for the display, the module 2 with the same liquid crystal display device 4 can be easily adapted without changing the module 2 with the same liquid crystal display device 4.

In the embodiment, the first area Ar1 and the second area Ar2 in the liquid crystal panel 41 are located within the light irradiation range by the light source 43. As a result, even when liquid crystal displays are made for each of the multiple openings (in the embodiment, the first opening 31 and second opening 32) in the dial 3, only one light source 43 is needed, which reduces the number of components and power consumption compared to the case where a light source 43 is disposed for each display.

In the embodiment, the first area Ar1 in the liquid crystal panel 41 is located on one side of the L-shaped portion 40, and the second area Ar2 in the liquid crystal panel 41 is located on the other side of the L-shaped portion 40. Thus, even when each area (in the embodiment, first area Ar1 and second area Ar2) is provided at different and distant locations, they can be efficiently illuminated by a single light source and displayed respectively.

In the embodiment, information including the time is displayed in the first area Ar1 on the liquid crystal panel 41. Information such as the time and day of the week is important in the module 2 mounted on the timepiece 100 and requires high visibility. In this regard, in the embodiment, the light source 43 is disposed close to the first area Ar1 side in the inclined portion 411, the first area Ar1 side being on a side close to the first area Ar1 in the liquid crystal panel 41, in plan view from the viewing side. This increases the brightness of the first area Ar1, which displays at least the very important information, to achieve an easy-to-read display.

In the embodiment, the light guide plate 42 has a protruding pattern 422 that diffuses the incident light so that its density becomes coarse to dense as it moves away from the light source 43. This allows more light to be diffused and guided to areas far from the light source 43 (for example, the second area Ar2), thereby enhancing the visibility of the liquid crystal display.

If, as in the embodiment, the solar panel 6 is disposed between the dial 3 and the liquid crystal panel 41 in the side view, the dial 3 is formed to be a light-transmissive dial. This allows the amount of light required to generate electricity to enter the solar panel 6.

In the embodiment, the drive mechanism 25 that moves the hand 23 and the hand shaft 24 to which the hand 23 is attached are disposed, and the liquid crystal panel 41 is provided in an area avoiding the hand shaft 24 and the drive mechanism 25. This allows digital display by the liquid crystal display device 4 without interfering with analog display by the hand 23, thus achieving a hybrid display capable of both analog and digital display. In addition, since the liquid crystal panel 41 is placed avoiding the drive mechanism 25, it is possible, for example, to expose the wheel train mechanism included in the drive mechanism 25 and to show the gears and other parts as a design configuration.

In the embodiment, the antenna-related component 26 is disposed and the liquid crystal panel 41 is provided in an area that does not overlap the antenna-related component 26 in plan view from the viewing side. In this way, the liquid crystal panel 41 and the antenna-related component 26 do not overlap in the thickness direction (Z direction), which prevents a decrease in antenna sensitivity.

The liquid crystal panel 41 in the embodiment is disposed inside the light guide plate 42 in plan view from the viewing side, and the first opening 31 in the dial 3 and the second opening 32 in the dial 3 are disposed inside the liquid crystal panel 41 in plan view from the viewing side. This allows the display to be made within the range of the first and second openings 31 and 32 of the dial 3. The entire liquid crystal panel 41 is illuminated by the light guide plate 42, which provides sufficient light to ensure visibility of the liquid crystal display.

In the timepiece 100 including the module 2 of the embodiment, the liquid crystal panel 41 as a single unit can perform liquid crystal display in multiple locations. This makes it possible to display a variety of functions in addition to the time, and the like, while keeping the number of components to a minimum.

Although the embodiments of the present disclosure have been described above, it goes without saying that the disclosure is not limited to such embodiments and can be varied in various ways without departing from the gist thereof. For example, as shown in FIG. 2, the above embodiment illustrates a case in which two openings (first opening 31 and second opening 32) are provided in the dial 3, each with a liquid crystal display, but the number of openings in the dial 3 is not limited to two. For example, a further display area may be provided in the portion extending in 12 o'clock to 6 o'clock direction where the second area Ar2 is provided in the embodiment. In this case, openings are also formed in the dial 3 corresponding to these display areas. In the embodiment, the 6 o'clock side portion of the dial 3, where only one relatively wide first opening 31 is provided, may be divided into smaller multiple openings. In this case, the 6 o'clock side area of the liquid crystal panel 41 may also be divided into smaller display areas corresponding to each opening in the dial 3.

In the above embodiment, an example in which the liquid crystal panel 41 and light guide plate 42 are disposed in an approximately inverted L-shape is shown, but the way in which the liquid crystal panel 41 and light guide plate 42 are disposed is not limited to this. For example, the liquid crystal panel 41 may be disposed in a substantially L-shaped arrangement with the liquid crystal panel 41 extending to 6 o'clock side and 9 o'clock side respectively in an analog-type timepiece, or may be extending to 12 o'clock side and 3 o'clock side respectively in an analog-type timepiece.

In the above embodiment, the case in which important information such as the time is displayed in the first area Ar1, which is disposed at 6 o'clock side, is shown as an example of a configuration that enhances the visibility of the display in the first area Ar1. For example, important information such as the time may be displayed in the second area Ar2 disposed at 1 o'clock side. In this case, the light source 43 may be placed closer to the second area Ar2 to give priority to the display in the second area Ar2.

The liquid crystal panel 41 broadly includes an irregular shape provided in an area that avoids the drive mechanism 25 (driver) in plan view from the viewing side, and is disposed at least from the first area Ar1 corresponding to the first opening 31 of the dial 3 to the second area Ar2 corresponding to the second opening 32 of the dial 3. In other words, the shape is not limited to including the L-shaped portion 40 as shown in the embodiment, but can be flexibly set according to the arrangement of each functional part, and the like.

In the embodiment, the case in which the module 2 is applied to timepiece 100, which is a wristwatch, is illustrated, but the module 2 is not limited to those applied to wristwatches, as long as it includes at least a dial 3 and a liquid crystal display device 4. Devices to which the module 2 according to the present disclosure can be applied may be various types of timepieces, such as pocket watches without a band. The module 2 can be widely applied to electronic devices such as various types of smartwatches, sports watches, and other devices that acquire biometric information such as heart rate and blood flow information as well as time.

In the above, one or more embodiments of the present disclosure are described. However, the scope of the present disclosure is not limited thereto, and includes the scope of the invention described in the claims and equivalents thereof.

## Claims

1. A module (2) comprising a dial (3), a light-transmissive liquid crystal panel (41), a light guide plate (42) that diffuses incident light to illuminate the liquid crystal panel, and a light source (43), the dial, the light-transmissive liquid crystal panel, and the light guide plate being disposed in order from a viewing side for a user, wherein
the dial has a first opening (31) and a second opening (32),
the liquid crystal panel is of an irregular shape provided in an area that avoids a driver in plan view from the viewing side, and is disposed at least from a first area (Ar1) corresponding to the first opening of the dial to a second area (Ar2) corresponding to the second opening of the dial, and
the light source allows light to enter the light guide plate and is provided outside between one end side where the first area of the liquid crystal panel is located and another end side where the second area is located, in plan view from the viewing side.

2. The module according to claim 1, wherein
the liquid crystal panel includes a substantially L-shaped portion (40) in plan view, and
an outer peripheral corner of the L-shaped portion in the liquid crystal panel is cut and formed into an inclined portion (411), the outer peripheral corner being an outside between the one end side where the first area is located and the another end side where the second area is located.

3. The module according to claim 2, wherein
the first area in the liquid crystal panel is located on one side of the L-shaped portion, and
the second area in the liquid crystal panel is located on the other side of the L-shaped portion.

4. The module according to claim 2 or 3, further comprising:
a driver (25) that moves a hand; and
a hand shaft (24) to which the hand is attached, wherein
the liquid crystal panel is provided in an area that avoids the hand shaft and the driver.

5. The module according to any one of claims 1 to 4, wherein
the light source is disposed close to a first area side between the first area and the second area in the liquid crystal panel in plan view from the viewing side.

6. The module according to any one of claims 1 to 5, wherein
the first area and the second area in the liquid crystal panel are located within a light irradiation range by the light source.

7. The module according to any one of claims 1 to 6, wherein
information including time is displayed in the first area on the liquid crystal panel.

8. The module according to any one of claims 1 to 7, wherein
the light guide plate has a protruding pattern that diffuses incident light so that a density of the protruding pattern becomes coarse to dense as moving away from the light source.

9. The module according to any one of claims 1 to 8, wherein
the dial is a light-transmissive dial, and
in a side view, a solar panel is disposed between the dial and the liquid crystal panel.

10. The module according to any one of claims 1 to 9, further comprising an antenna-related component, wherein
the liquid crystal panel is provided in an area that does not overlap with the antenna-related component in plan view from the viewing side.

11. The module according to any one of claims 1 to 10, wherein
the liquid crystal panel is disposed inside the light guide plate in plan view from the viewing side, and
the first opening in the dial and the second opening in the dial are disposed inside the liquid crystal panel in plan view from the viewing side.

12. A timepiece comprising the module according to any one of claims 1 to 11.
